# EUROPÄISCHE PATENTSCHRIFT

(11) **EP 2 516 905 B1**
(45) Veröffentlichungstag und Bekanntmachung des Hinweises auf die Patenterteilung: **20.11.2013**
(21) Anmeldenummer: 10788245.8
(22) Anmeldetag: 27.11.2010
(51) Int. Cl.: F16K 31/06

(54) **ELEKTROMAGNETVENTIL**
ELECTROMAGNETIC VALVE
VANNE ÉLECTROMAGNÉTIQUE

(30) Priorität: 21.12.2009 DE 102009060028
(43) Veröffentlichungstag der Anmeldung: 31.10.2012
(73) Patentinhaber: Robert Bosch GmbH, 70469 Stuttgart (DE)
(72) Erfinder: SCHEMPP, Roland, 97753 Karlstadt (DE); WALTER, Christian, 07646 Tautendorf (DE)
(74) Vertreter: Thürer, Andreas
(86) Internationale Anmeldenummer: PCT/EP2010/007207
(87) Internationale Veröffentlichungsnummer: WO 2011/082739

(56) Entgegenhaltungen:
- DE-A1- 4 328 709
- DE-U1- 29 905 883
- US-A1- 2005 189 512

## Beschreibung

Die Erfindung betrifft ein Magnetventil und ein Verfahren zum Steuern eines derartigen Magnetventils.

In der DE 10 2004 009 460 A1 ist ein Magnetventil offenbart. Dieses hat ein Ventilgehäuse mit einem darin geführten Ventilschieber zum Steuern von Druckmittelverbindungen. Der Ventilschieber wird dabei von einem Hubmagneten betätigt. Dieser hat eine ringförmige bzw. rohrförmige in einen Magnettopf aufgenommene Spule, wobei der Magnettopf dabei von dem Ventilschieber durchsetzt ist. Die Spule ist etwa koaxial zum Ventilschieber angeordnet und umgreift diesen. Mit einem aus dem Magnettopf auskragenden Endabschnitt ist der Ventilschieber mit einem Magnetanker fest verbunden. Zum Verschieben des Ventilschiebers wird der Magnetanker über die Spule mit einer Magnetkraft beaufschlagt, wodurch sich dieser in Richtung des Magnettopfs bewegt, bis eine zum Ventilschieber weisende Ringstirnfläche des Magnetankers an einer Ringstirnfläche des Magnettopfs anliegt.

In der EP 1 088 182 B1 ist ein weiteres Magnetventil dargestellt. Hierbei ist anstelle eines Ventilschiebers ein über einen Hubmagneten betätigbarer Ventilstößel vorgesehen, der bei Betätigung eine auf einem Ventilsitz angeordnete Ventilkugel freigibt. Der Hubmagnet weist eine einen länglichen Polkern umgreifende Spule auf. Der Polkern ist dabei von dem Ventilstößel durchsetzt, der an beiden Enden des Polkerns auskragt. Über einen ersten Endabschnitt des Ventilstößels ist die Ventilkugel mit einer Schließkraft beaufschlagbar. An einem zweiten Endabschnitt ist der Ventilstößel mit einem Flachanker fest verbunden. Dieser wird bei einer Bestromung der Spule von dieser wegbewegt, wodurch eine durch den Ventilstößel auf die Ventilkugel wirkende Schließkraft abgebaut ist.

Ein gattungsgemäßes Magnetventil ist aus der DE-A-4328709, DE-U-29905883 und US 2005/189512 bekannt.

Diese vorstehend erläuterten Lösungen haben den Nachteil, dass die Magnetventile vergleichsweise langsam schalten und vorrichtungstechnisch recht aufwendig ausgestaltet sind.

Demgegenüber liegt der Erfindung die Aufgabe zu Grunde, ein einfach aufgebautes und schnell schaltendes Magnetventil zu schaffen. Des Weiteren liegt der Erfindung die Aufgabe zu Grunde ein Verfahren zum Steuern eines derartigen-Magnetventils zu schaffen, mit dem dieses bei geringem Energiebedarf schnell schaltbar ist.

Diese Aufgabe wird bezüglich dem Magnetventil mit den Merkmalen des Patentanspruchs 1 und bezüglich des Verfahrens mit den Merkmalen des Patentanspruchs 13 gelöst.

Erfindungsgemäß hat ein Magnetventil ein Ventilgehäuse, in dem ein Ventilkörper axial bewegbar geführt ist. Bei dem Ventilkörper handelt es sich insbesondere um einen Ventilschieber oder einen Ventilstößel zum Steuern zumindest einer Druckmittelverbindung. Zum Betätigen des Ventilköpers mit einem Hubmagneten ist der Ventilkörper mit einem Anker, insbesondere einem Flachanker verbunden. Der Hubmagnet ist dabei gegenüber liegend von einer von dem Ventilkörper abweisenden Stirnseite des Ankers angeordnet, um diesen mit einer Magnetkraft zu beaufschlagen.

Diese Lösung hat den Vorteil, dass ein derartiges Magnetventil äußerst schnell betätigt werden kann und eine hohe Magnetkraft aufweist, da der Hubmagnet nicht von einem Ventilkörper, wie im eingangs erläuterten Stand der Technik, durchdrungen ist und somit große wirksame Polflächen aufweist. Zur Betätigung des Magnetventils wird der Ventilkörper über den Anker in Richtung des Hubmagneten mit den großflächigen wirksamen Polflächen gezogen. Dieses Magnetventil ist zusätzlich äußerst einfach aufgebaut.

Vorzugsweise ist der Anker über den Ventilkörper in dem Ventilgehäuse geführt und benötigt keine eigene Führung.

Erfindungsgemäß hat der Hubmagnet eine Magnetspule, die in eine etwa in eine axiale Richtung eingebrachte im Wesentlichen hohlzylindrische Ausnehmung eines Magnettopfs eingesetzt ist, wodurch der Magnettopf zwei Ringflächen als vergleichsweise groß wirksame Polflächen aufweist.

In weiterer vorteilhafter Ausgestaltung der Erfindung ist der Magnettopf auf einer zum Anker zuweisenden Topfseite derart axial zurückgestuft, dass eine ringförmige Stufe geschaffen ist, in die der Anker bei einer Hubbewegung eintauchen kann. Durch die Stufe wird der Magnetfluss gebündelt, wodurch die am Anfang eines Betätigungsvorgangs auf den Anker wirkende Magnetkraft, im Vergleich zum Stand der Technik, wesentlich erhöht ist (Polformeffekt).

Erfindungsgemäß ist weiter etwa koaxial zum Magnettopf ein Anschlagstift in diesen eingesetzt. Dieser kragt etwas aus der Topfseite des Magnettopfs zum Anker hin aus. Der Anschlagstift dient als stabiler Anschlag für den Anker und/ oder den Ventilschieber und definiert einen Restluftspalt zwischen der dem Hubmagneten zuweisenden Stirnseite des Ankers und der Topfseite.

Zum Verschieben des Ventilkörpers zusammen mit dem Anker in eine Grundposition bei ausgeschaltetem Hubmagneten ist eine Feder vorgesehen, die vorrichtungstechnisch einfach in eine Aussparung des Anschlagstifts angeordnet ist und sich an diesem abstützt und den Anker bzw. Ventilkörper mit einer Federkraft beaufschlagt.

Zur Verbilligung der Herstellung des Magnetventils stützen sich der Anschlagstift und der Magnettopf jeweils an ihrer vom Anker abweisenden Stirnseite an einer einzigen gemeinsamen Stützfläche ab, wodurch die Anzahl von einzuhaltenden Toleranzen im Vergleich zum Stand der Technik verringert ist. Des Weiteren ist hierdurch mit geringem vorrichtungstechnischem Aufwand der Restluftspalt in der Schaltposition zwischen der Stirnseite des Ankers und der Topfseite des Magnettopfs genau definiert, was ein wesentlicher Einflussfaktor für die Abschaltzeit ist.

Der Magnettopf ist vorzugsweise in dem Ventilgehäuse genau eingepasst, wodurch ein guter Wärmeübergang zwischen Magnettopf und dem Ventilgehäuse geschaffen ist.

Zur Erzeugung eines wirbelstromarmen Magnetkreises, der einen schnellen Aufbau des Magnetflusses ermöglicht, besteht der Magnettopf aus einem weichmagnetischen Material mit hohem spezifischem elektrischem Widerstand (hochohmig), insbesondere aus einem Press- oder Sinterwerkstoff, insbesondere aus sehr hochohmigen Soft Magnetic Composits (SMC).

Vorteilhafte Ankermaterialen sind hochohmige weichmagnetische Massivwerkstoffe, insbesondere legierter Stahl mit einem hohen Chromanteil etwa zwischen 10 und 15 %.

Das Ventilgehäuse besteht vorzugsweise aus einem austenitischen Stahl und der Anschlagstift aus einem nicht ferromagnetischen Werkstoff. Dies kann beispielsweise ebenfalls ein austenitischer Stahl oder ein Edelstahl sein.

Ein erfindungsgemäßes Verfahren zum schnellen und energiesparenden Schalten eines derartigen Magnetventils kann folgende Schritte aufweisen:
Anlegen einer Boostspannung an den Hubmagneten, die höher als eine Nennspannung ist, für einen schnellen Aufbau des magnetischen Flusses in der Anfangsphase einer Hubbewegung des Ankers, und anschließend nach der Anfangsphase in der weiteren Hubbewegung Anlegen einer verringerten Spannung.

Als verringerte Spannung eignet sich eine zwischen der Boost- und der Nennspannung liegenden Pick-Up-Spannung zur weiteren Beschleunigung des Ankers. In einem Anschließenden Schritt kann eine negative Löschspannung, zur schnellen Reduzierung der Feldenergie und zur Verringerung der Magnetkraft am Hubende, an den Hubmagneten angelegt werden. Danach wird beispielsweise zum Halten des Ankers eine positive und unterhalb der Pick-Up-Spannung liegende Haltespannung an den Hubmagneten angelegt.

Zum schnellen Zurückbewegen des Ankers in Richtung einer Grundstellung wird eine negative Löschspannung an den Hubmagneten angelegt, bevor eine Spannungsversorgung unterbrochen wird.

Sonstige vorteilhafte Weiterbildungen der Erfindung sind Gegenstand weiterer Unteransprüche.

In Folgendem werden bevorzugte Ausführungsbeispiele der Erfindung anhand schematischer Zeichnungen näher erläutert. Es zeigen:
Figur 1 in einer Längsschnittansicht ein erfindungsgemäßes Magnetventil gemäß einem ersten Ausführungsbeispiel;
Figur 2 einen Ausschnitt des Magnetventils aus Figur 1;
Figur 3 in einem Diagramm einen Spannungs-, Strom- und Ankerhubverlauf bei einem Schaltvorgang des Magnetventils;
Figur 4 in einer Längsschnittansicht das Magnetventil gemäß einem zweiten Ausführungsbeispiel; und
Figur 5 in einer Längsschnittansicht das Magnetventil gemäß einem dritten Ausführungsbeispiel.

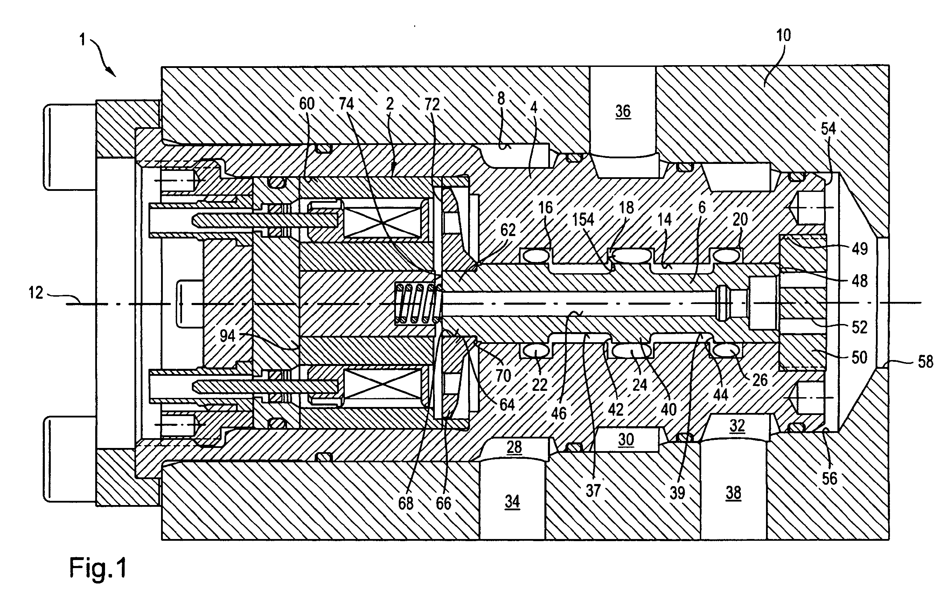

Figur 1 stellt in einer Längsschnittansicht ein Magnetventil 1 gemäß einem ersten Ausführungsbeispiel dar. Dieses weist einen elektrischen Hubmagneten 2 zum Ansteuern eines in einem Ventilgehäuse 4 gleitend geführten Ventilschiebers 6 auf.

Das Ventilgehäuse 4 ist patronenförmig ausgestaltet und in eine Stufenbohrung 8 eines Steuerblocks 10 eingesetzt. Der Ventilschieber 6 ist etwa koaxial zu einer Längsachse 12 des Ventilgehäuses 4 eingebrachten Ventilbohrung 14 gleitend gelagert. In diese sind im Bereich des Ventilschiebers 6 drei in Axialrichtung zueinander beabstandete Steuerkammern 16, 18 und 20 radial eingebracht. Die Steuerkammern 16, 18 und 20 sind jeweils über eine radial in dem Ventilgehäuse 4 ausgebildete Sternbohrung 22, 24 bzw. 26 mit jeweils vom Ventilgehäuse 4 und dem Steuerblock 10 begrenzten Ringkammern 28, 30 bzw. 32 in Druckmittelverbindung. Die Ringkammern 28, 30 und 32 wiederum sind jeweils mit in den Steuerblock 10 eingebrachten Druckmittelkanälen 34, 36 bzw. 38 verbunden und jeweils durch eine radial von außen her zurückgestufte Aussparung des Ventilgehäuses 4 und einer Stufe der Stufenbohrung 8 des Steuerblocks 10 gebildet.

Der Ventilschieber 6 ist in der Figur 1 in einer Grundstellung, bei der die Steuerkammern 16 bis 20 miteinander verbunden sind. Die Druckmittelverbindung zwischen der in der Figur 1 linken Steuerkammer 16 und der mittleren Steuerkammer 18 erfolgt über eine Ringnut 37 des Ventilschiebers 6 und die Druckmittelverbindung zwischen der mittleren Steuerkammer 18 und der rechten Steuerkammer 20 erfolgt über eine weitere Ringnut 39. Durch die Ringnuten 37, 39 ist etwa mittig des Ventilschiebers 6 ein Radialbund 40 gebildet über dessen in der Figur 1 linken Steuerkante 42 bei Verschieben des Ventilschiebers 6 nach links die Druckmittelverbindung zwischen der linken Steuerkammer 16 und der mittleren Steuerkammer 18 zugesteuert wird. Eine weitere Steuerkante 44 ist durch die Ringnut 39 im Bereich der rechten Steuerkammer 20 gebildet, durch die bei der Verschiebung des Ventilschiebers 6 in Richtung einer Schaltstellung nach links die Druckmittelverbindung zwischen der Steuerkammer 20 und der mittleren Steuerkammer 18 zugesteuert wird.

Der Ventilschieber 6 ist von einer sich etwa koaxial erstreckenden Durchgangsbohrung 46 durchsetzt. Hierdurch ist eine in der Figur 1 rechte Ringstirnfläche 48 gebildet, mit der dieser in der gezeigten Grundstellung an einer etwa koaxial in eine in der Figur 1 von rechts in das Ventilgehäuse 4 eingebrachten Gewindebohrung 49 eingeschraubten Anschlagsmutter 50 etwa anliegt. Diese hat eine als Innensechskant ausgebildete in Axialrichtung durchgängige Aussparung 52, in die ein entsprechendes Werkzeug zum Einschrauben der Anschlagsmutter 50 eingreifen kann. Das Ventilgehäuse 4 begrenzt mit seiner in der Figur 1 rechten Stirnfläche 54 zusammen mit einer Stufe der Stufenbohrung 8 des Steuerblocks 10 eine Druckmittelkammer 56, die mit einen in den Steuerblock 10 axial eingebrachten Leckageanschluss 58 verbunden ist.

Der Ventilschieber 6 kragt in der Figur 1 links aus der Ventilbohrung 14 in eine radial wesentlich erweiterte Hubmagnetbohrung 60 mit einem Endabschnitt 62 aus. Dieser ist radial zurückgestuft, wodurch eine Aufnahmestufe 64 gebildet ist. Auf diese ist ein Flachanker 66 mit seiner etwa koaxial ausgebildeten Durchgangsbohrung 68 aufgesteckt und durch eine Presspassung oder auf sonstige Weise mit dem Ventilschieber 6 fest verbunden. Der Flachanker 66 liegt dabei an eine durch die Aufnahmestufe 64 gebildete Ringfläche 70 des Ventilschiebers 6 etwa an. Des Weiteren bildet der Flachanker 66 mit seiner vom Ventilschieber 6 abgewandten Stirnseite 72 zusammen mit der in der Figur 1 linken Ringstirnfläche 74 des Ventilschiebers 6 eine etwa ebene Fläche aus.

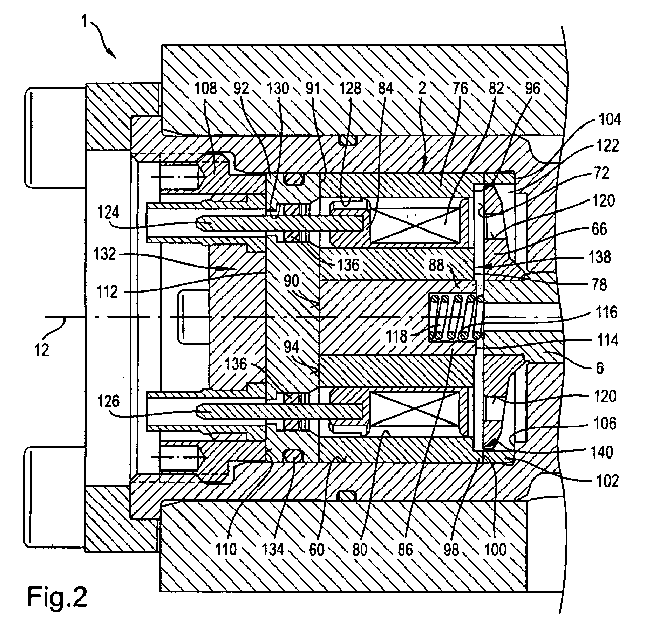

In der Figur 2 ist der besseren Darstellung halber ein Ausschnitt des Magnetventils 1 aus Figur 1 im Wesentlichen mit dem Hubmagneten 2 und dem Flachanker 66 gezeigt. Der Hubmagnet 2 hat einen gegenüberliegend von der Stirnseite 72 des Flachankers 66 angeordneten, etwa kreiszylindrischen Magnettopf 76. In diesem ist an seiner dem Flachanker 66 zuweisenden Topfseite 78 her eine etwa hohlzylindrische Spulenaufnahme 80 eingebracht, in die eine ringförmige Spulenwicklung 82 eingesetzt ist. Diese ist dabei bis auf ihre Außenmantelfläche von einem Spulenkörper 84 umfasst.

Etwa koaxial zum Magnettopf 76 ist in diesem eine Durchgangsbohrung 86 eingebracht, in die ein Anschlagstift 88 eingesetzt ist. Dieser liegt mit einer von dem Flachanker 66 abweisenden Stirnfläche 90 an einer Stützfläche 91 einer in die Hubmagnetbohrung 60 eingesetzten Dichtplatte 92 etwa an. An dieser Stützfläche 91 stützt sich ebenfalls der Magnettopf 76 mit einer Ringstirnfläche 94 ab.

Der Magnettopf 76 ist auf seiner von der Ringstirnfläche 94 abweisenden Topfseite 78 mit einer kreiszylindrischen Aussparung, deren Durchmesser etwas größer als der des Flachankers 66 ist, in Axialrichtung zurückgestuft, wodurch eine Außenpolstufe 96 gebildet ist. Durch diese ist ein ringförmiger Topfvorsprung 98 an dem Magnettopf 76 ausgebildet, der mit einer Ringstirnfläche 100 an einem etwa hohlzylindrischen Stützring 102 aus nicht ferromagnetischem Material etwa anliegt. Dieser hat etwa einen gleichen Innendurchmesser wie die Außenpolstufe 96 des Magnettopfs 76 und umgreift den Flachanker 66. Der Stützring 102 wiederum liegt mit seiner dem Magnettopf abweisenden Ringstirnfläche 104 an einem Bohrungsgrund 106 der Hubmagnetbohrung 60 etwa an.

Der Magnettopf 76 wird über die Dichtplatte 92 von einer in die Hubmagnetbohrung 60 eingeschraubten Hohlschraube 108 gegen den Stützring 102 gespannt, der sich wiederum am Bohrungsgrund 106 abstützt. Die Hohlschraube 108 ist in ein in die Hubmagnetbohrung 60 eingebrachtes Gewinde eingeschraubt und liegt mit einer Ringstirnfläche 110 etwa an einer Stützfläche 112 der Dichtplatte 92 an.

In den Anschlagstift 88 ist von einer dem Ventilschieber 6 zuweisenden Anschlagsfläche 114 her eine Sacklochbohrung 116 eingebracht. In dieser ist eine Druckfeder 118 eingesetzt, die sich am Bohrungsgrund der Sacklochbohrung 116 abstützt und den Ventilschieber 6 von seiner Ringstirnfläche 74, siehe Figur 1, mit einer Federkraft beaufschlagt und gegen die Anschlagsmutter 50 in der gezeigten Grundstellung spannt.

Eine Hubbewegung des Flachankers 66 zusammen mit dem Ventilschieber 6 in der Figur 2 nach links wird durch die Anschlagsfläche 114 des Anschlagstifts 88 begrenzt, da dieser etwas aus einer Polfläche der Außenpolstufe 96 axial auskragt.

In den Flachanker 66 sind axial zumindest zwei Druckmittelbohrungen 120 eingebracht, wodurch eine Druckmittelverbindung zwischen einer in Figur 2 linken und rechten Seite des Flachankers 66 geschaffen ist. Der von dem Flachanker 66, der Außenpolstufe 96 des Magnettopfs 76 und dem Stützring 102 begrenzte Druckmittelraum 122 ist über die Durchgangsbohrung 46 des Ventilschiebers 6 aus Figur 1, der Aussparung 52 der Anschlagsmutter 50 und der Druckmittelkammer 56 mit dem Leckageanschluss 58 in Druckmittelverbindung.

Zur elektrischen Kontaktierung der Spulenwicklung 82 sind zwei Kontaktstifte 124, 126 vorgesehen. Diese sind jeweils von dem Spulenkörper 84 durch eine in den Magnettopf 76 eingebrachte Bohrung 128 und eine in die Dichtplatte 92 koaxial dazu eingebrachte Bohrung 130 nach außen geführt. Die Kontaktstifte 124, 126 kragen dabei innerhalb der Hohlschraube 108 aus der Dichtplatte 92 aus, wobei auf die Kontaktstifte 124, 126 dann eine Steckeraufnahme 132 gesetzt ist.

Zum Abdichten der Hubmagnetbohrung 60 nach außen weist die Dichtplatte 92 eine in Radialrichtung gesehen äußere Ringnut mit einem O-Ring 134 auf, der an der Hubmagnetbohrung 60 und in der Ringnut dichtend anliegt. Des Weiteren ist in den Bohrungen 130 für die Kontaktstifte 124, 126 ebenfalls jeweils ein O-Ring 136 eingesetzt, um die Umgebung gegen das Druckmedium abzudichten. Zusätzlich wird ein Austreten von Vergussmasse vermieden, falls der Spulenkörper 84 mit dem Hubmagneten 2 vergossen oder verspritzt wurde.

Zum Betätigen des Magnetventils 1 wird der Hubmagnet 2 über die Kontakte 124, 126 aus Figur 2 bestromt, wodurch sich ein Magnetfeld aufbaut. Hierdurch wird der Flachanker 66 mit einer anziehenden Magnetkraft beaufschlagt, wobei sich dieser dann zusammen mit dem Ventilschieber aus der Figur 1 nach links hin zum Hubmagneten 2 bewegt, bis die Ringstirnfläche 74 des Ventilschiebers 6 an der Anschlagsfläche 114 (siehe Figur 2) des Anschlagstifts 88 etwa anliegt. In dieser Position befindet sich der Ventilschieber 6 in einer Schaltstellung. Um diese Schaltstellung schnellstmöglich zu erreichen und somit ein sogenanntes schnellschaltendes Wegeventil bzw. Magnetventil zu schaffen, ist ein wirbelstromarmer Magnetkreis erforderlich. Wirbelströme bilden sich beim Aufbau des Magnetfelds und stellen Energieverluste dar. Schnelle Magnetfeldänderungen, die für ein schnelles Schalten des Ventilschiebers 6 notwendig sind, erzeugen große Wirbelströme, die der Änderung des Magnetfelds entgegenwirken und dieses hierdurch in der Änderung verzögern. Zum Senken der Wirbelströme bestehen Bauteile des Magnetventils 1 vorteilhafterweise aus hochohmigem Material, was im Folgenden erläutert ist.

Der Magnettopf 76 aus der Figur 2 besteht aus einem sehr hochohmigen Werkstoff. Der Flachanker 66 besteht aus hochohmigem Massivmaterial, was ebenfalls dazu führt, dass die Wirbelstromverluste gering bleiben. Das Ventilgehäuse 4 besteht vorzugsweise aus austenitischem Stahl, der im Wesentlichen nicht ferromagnetisch ist. Ein Magnetfluss, der sich im Bereich des Ventilgehäuses 4 beim Aufbau des Magnetfelds ausbildet und als Streufluss bezeichnet wird, verursacht durch den einen hohen ohmschen Widerstand aufweisenden austenitischen Stahl ebenfalls einen verringerten Wirbelstrom. Des Weiteren wird das Ventilgehäuse 4 durch den hohen magnetischen Widerstand kaum magnetisiert, wodurch Energie gespart wird. Der Anschlagstift 88 aus der Figur 2 besteht ebenfalls aus einem austenitischen Stahl.

Durch die Anordnung des Spulenkörpers 84 in der hohlzylindrischen Spulenaufnahme 80 hat der Magnettopf 76 stirnseitig eine innere und äußere Ringfläche 138, 140. Der eingangs erläuterte Stand der Technik weist hingegen nur eine Ringfläche auf. Zwischen den Ringflächen 138, 140 des Magnettopfs 76 und der Stirnseite 72 des Flachankers 66 sind somit zwei ringförmige Luftspalte gebildet, wodurch die auf den Flachanker 66 wirkende Magnetkraft wesentlich, im Vergleich zum Stand der Technik, erhöht ist.

Der in Figur 2 am Magnettopf 76 ausgebildete ringförmige Topfvorsprung 98 dient zur Erhöhung der auf den Flachanker 66 wirkenden Magnetkraft. In der Grundstellung des Ventilschiebers 4 liegen eine Innenkante des Topfvorsprungs 98 und eine Außenkante des Flachankers 66 gegenüber, wodurch der durch das Magnetfeld gebildete Magnetfluss hierdurch gebündelt ist, was als Polformeffekt bezeichnet wird. Somit kann mit geringer Energie eine ausreichende Magnetkraft beim Starten des Schaltvorgangs des Magnetventils 1 erreicht werden. Des Weiteren reduzieren sich durch die Geometrie des Topfvorsprungs 98 bei einer Hubbewegung des Flachankers 66 in der Figur 2 nach links, bei der dieser in die Außenpolstufe 96 eintaucht, die in Axialrichtung wirkenden Magnetkräfte und die in Radialrichtung wirkenden Magnetkräfte werden erhöht, da eine äußere Mantelfläche des Flachankers 66 und eine innere Innenmantelfläche des Topfvorsprungs 98 in Axialrichtung in Deckung gebracht werden. Die in Axialrichtung wirkende Magnetkraft ist bei Erreichen des maximalen Hubwegs wesentlich verringert, wodurch die Geschwindigkeit des Ventilschiebers 6 aus Figur 1 beim Auftreffen auf den Anschlagstift 88 vorteilhafterweise reduziert ist. Hierdurch ist der Verschleiß zwischen dem Ventilschieber 6 und dem Anschlagstift 88 vergleichsweise gering. Die in Axialrichtung wirkende Magnetkraft ist durch den Topfvorsprung 98 des Weiteren an die bei einer Hubbewegung des Flachankers 66 (nach links in Figur 2) gegenwirkende Federkraft der Feder 118 angepasst, da die axiale Magnetkraft sinkt, während die Federkraft steigt.

Der Magnettopf 76 in Figur 2 ist mit äußerst geringen Toleranzen in die Hubmagnetbohrung 60 des Ventilgehäuses 4 eingepasst, wodurch die Wärmeleitung sehr hoch ist. Das gleiche gilt für das Ventilgehäuse 4, das mit äußerst geringen Toleranzen in die Stufenbohrung 8 insbesondere im Bereich des Hubmagneten 2 in den Steuerblock 6 eingepasst ist. Somit wird die von der Spulenwicklung 82 und dem Magnettopf 76 insbesondere durch Wirbelstromverluste erzeugte Wärme optimal über das Ventilgehäuse 4 zum Steuerblock 10 abgeleitet.

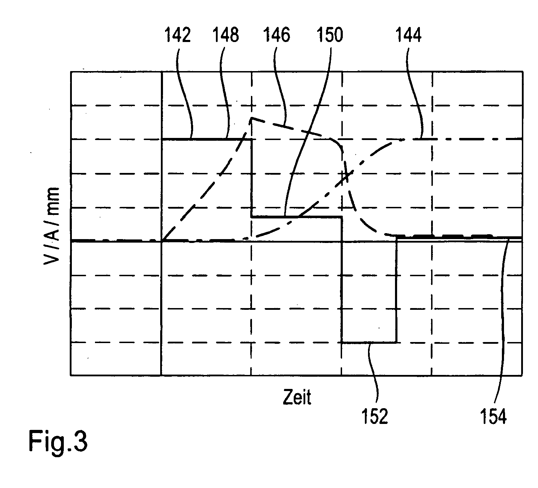

In Figur 3 ist ein Diagramm dargestellt, das den Spannungs- und Stromverlauf in der Spulenwicklung 82 und die Hubbewegung des Flachankers 66 aus Figur 2 von der Grundstellung in die Schaltstellung über die Zeit abbildet. Der Spannungsverlauf des Hubmagneten 2 ist über eine mit einer durchgehenden Strichlinie dargestellte Spannungskurve 142, die Hubbewegung des Flachankers 66 über eine als Strichpunktlinie dargestellte Hubkurve 144 und der Stromverlauf über eine als Strichlinie dargestellte Stromkurve 146 abgebildet. Auf der Abszisse ist die Zeit und auf der Ordinate sind die Spannung V, die Stromstärke A und der Hubweg in mm gezeigt.

Um den Spulenstrom und damit das Magnetfeld schnell aufzubauen, wird beim Einschalten des Hubmagneten 2 und damit am Anfang des Schaltvorgangs eine Boostspannung 148 an die Spulenwickung 82 - siehe Figur 2 - angelegt, die deutlich höher ist als eine Nennspannung ist (Übererregung). Der Boostspannungsverlauf ist durch die obere etwa waagerechte Linie der Spannungskurve 142 gezeigt. Durch die hohe Boostspannung 148 steigt der Spulenstrom ebenfalls schnell an, was durch die Steigung der Stromkurve 146 im Bereich der Kurve der Boostspannung 148 gezeigt ist. Sobald sich der Flachanker 66 bewegt, wird die Boostspannung 148 zur Pick-Up-Spannung 150 - ist als etwa waagrechte Linie dargestellt - reduziert. Die Stromkurve 146 fällt in Bereich der Pick-Up-Spannung 150 wieder leicht ab und der Flachanker 66 wird weiter beschleunigt, was durch die ansteigende Hubkurve 144 im Bereich der Pick-Up-Spannung 150 verdeutlicht ist. Bevor der Flachanker 66 das Ende seines an dem Anschlagstift 88 begrenzten Hubwegs erreicht, wird auf eine negative Löschspannung 152 umgeschaltet, die als etwa waagrechte Linie in der Figur 3 dargestellt ist. Die Stromkurve 146 fällt hierdurch stark ab, wodurch das Magnetfeld und somit die Magnetkraft schnell abgebaut werden. Die Geschwindigkeit der Hubbewegung des Flachankers 66 wird somit verringert. Dies führt zu einer recht geringen Auftreffenergie des Ventilschiebers 6 auf den Anschlagstift 88, wodurch der Verschleiß reduziert ist. Im Anschluss an die Löschspannung 152 wird auf die positive Haltespannung 154 (etwa waagerechte Linie) zum Halten des Flachankers 66 in der Schaltstellung gewechselt, die niedriger als die Nennspannung ist. Die Erwärmung der Spulenwicklung 82 ist hierdurch geringer.

Zum schnellen Zurückbewegen des Ventilschiebers 6 in Figur 2 in die Grundstellung wird die an der Spulenwickung 82 anliegende Spannung erneut auf die negative Löschspannung umgeschaltet und danach erst unterbrochen. Der Ventilschieber 6 wird dann zusammen mit dem Flachanker 66 durch die auf ihn wirkende Federkraft der Druckfeder 118 zurück bis zum Anschlag an die Anschlagsmutter 50 bewegt.

In der Schaltstellung ist die Stirnseite 72 des Flachankers 66, siehe Figur 2, durch den Anschlagstift 88 von den Ringflächen 138, 140 des Magnettopfs 76 beabstandet und es ist ein Restluftspalt gebildet. Hierdurch wird insbesondere ein Anhaften des Flachankers 66 an den Magnettopf 76 vermieden. Zur Schaffung des Restluftspalts ist im Wesentlichen nur die Einhaltung von zwei Maßen nötig. Dieses ist zum einen eine axiale Länge des Anschlagstifts 88 und zum anderen eine axiale Länge des Magnettopfs 76 zwischen seiner linken Ringstirnfläche 94 und seinen rechten Ringflächen 138, 140.

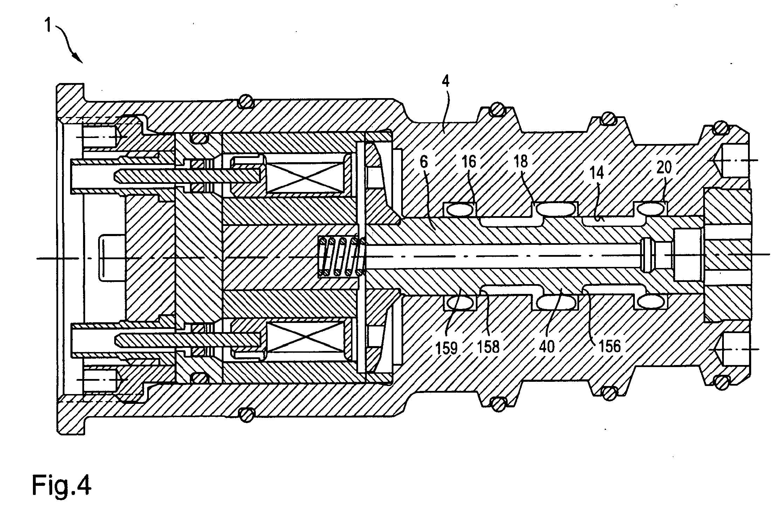

Figur 4 stellt das Magnetventil 1 in einer Längsschnittansicht gemäß einem zweiten Ausführungsbeispiel dar. Im Unterschied zum ersten Ausführungsbeispiel aus Figur 1 ist in der gezeigten Grundstellung des Ventilschiebers 6 die Druckmittelverbindung zwischen den Steuerkammern 16, 18 und 20 unterbrochen. Bei einer Hubbewegung des Ventilschiebers 6 in Richtung einer Schaltstellung gelangen die Steuerkammern 16 bis 20 in Druckmittelverbindung, da eine rechte Steuerkante 156 des Radialbunds 40 und eine im Bereich der Steuerkante 16 angeordnete Steuerkante 158 eines weiteren Radialbunds 159 des Ventilschiebers 6 nicht mehr in Überdeckung mit der Ventilbohrung 14 des Ventilgehäuses 4 sind.

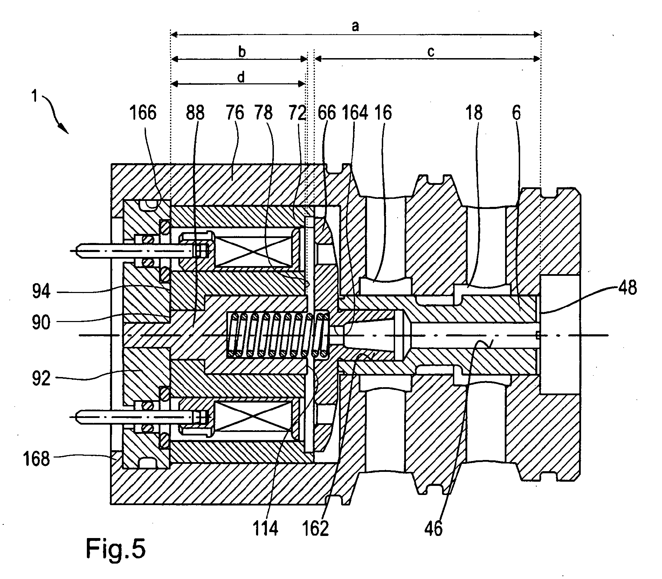

In Figur 5 ist in einer Längsschnittansicht das Magnetventil 1 gemäß einem dritten Ausführungsbeispiel abgebildet. Dieses weist nur zwei Steuerkammern 16, 18 auf, die in einer Grundstellung des Ventilschiebers 6 nicht in Druckmittelverbindung stehen. Der Flachanker 66 ist im Gegensatz zu den vorhergehenden Ausführungsbeispielen mit einem axialen Haltezapfen 160 in eine in den Endabschnitt 66 des Ventilschiebers 6 eingebrachte Aufnahmebohrung 162 fest eingesetzt. Mittig ist der Haltezapfen 160 mit einer Längsbohrung 164 zur Druckmittelverbindung mit der Durchgangsbohrung 46 des Ventilschiebers 6 durchsetzt. Anstelle des Ventilschiebers 6 liegt nun der Flachanker 66 in der Schaltstellung an dem Anschlagstift 88 an.

Die Konstruktion nach Fig. 5 hat einen weiteren Vorteil. Durch eine Stufe 166 im Gehäuse 4 hat die Dichtplatte 92 einen definierten Anschlag. Der Hub des Ventilschiebers 6 wird durch der Maße a; b und c bestimmt, wobei a eine axiale Länge von der Ringstirnfläche 48 des Ventilschiebers 6 bis zur Ringstirnfläche 94 des Magnettopfs 76, b eine axiale Länge von der Anschlagsfläche 114 bis zur Stirnfläche 90 des Anschlagstifts 88 und c eine axiale Länge von der Stirnseite 72 des Flachankers 66 bis zur Ringstirnfläche 48 des Ventilschiebers 6 ist. Diese drei Maße a, b, c werden mit einer geringen Toleranz hergestellt. Der Restluftspalt ist durch das Maß d - b festgelegt, wobei d eine axiale Länge von der Ringstirnfläche 94 bis zur Topfseite 78 des Magnettopfs 76 ist. Durch die geringe Anzahl der einzuhaltenden Maße ist der Herstellungsaufwand des Magnetventils 1 äußerst gering, da beispielsweise ein Abgleich mit Zwischenscheiben oder einen in Axialrichtung verschiebbaren Anschlagstift, wie im Stand der Technik, nicht mehr notwendig ist.

Die Dichtplatte 92 ist in Figur 5 mit einer umlaufenden Bördelung 168 axial gehaltert.

Offenbart ist ein Magnetventil mit einem Ventilgehäuse, in dem ein Ventilkörper, beispielsweise ein Ventilschieber oder ein Ventilstößel, zum Steuern zumindest einer Druckmittelverbindung verschiebbar geführt ist. Der Ventilkörper ist fest mit einem Flachanker verbunden. Gegenüberliegend von einer von dem Ventilkörper abweisenden Stirnseite des Flachankers ist ein Hubmagnet angeordnet, über den der Flachanker zusammen mit dem Ventilschieber mit einer Magnetkraft zum Schalten des Magnetventils beaufschlagbar ist.

### Bezugszeichenliste

- 1: Magnetventil
- 2: Hubmagnet
- 4: Ventilgehäuse
- 6: Ventilschieber
- 8: Stufenbohrung
- 10: Steuerblock
- 12: Längsachse
- 14: Ventilbohrung
- 16, 18 ,20: Steuerkammer
- 22, 24, 26: Sternbohrung
- 28, 30, 32: Ringkammer
- 34, 36, 38: Druckmittelkanal
- 37, 39: Ringnut
- 40: Radialbund
- 42: Steuerkante
- 44: Steuerkante
- 46: Durchgangsbohrung
- 48: Ringstirnfläche
- 49: Gewindebohrung
- 50: Anschlagsmutter
- 52: Aussparung
- 54: Stirnfläche
- 56: Druckmittelkammer
- 58: Leckageanschluss
- 60: Hubmagnetbohrung
- 62: Endabschnitt
- 64: Aufnahmestufe
- 66: Flachanker
- 68: Durchgangsbohrung
- 70: Ringfläche
- 72: Stirnseite
- 74: Ringstirnfläche
- 76: Magnettopf
- 78: Topfseite
- 80: Spulenaufnahme
- 82: Spulenwickung
- 84: Spulenkörper
- 86: Durchgangsbohrung
- 88: Anschlagstift
- 90: Stirnfläche
- 91: Stützfläche
- 92: Dichtplatte
- 94: Ringstirnfläche
- 96: Außenpolstufe
- 98: Topfvorsprung
- 100: Ringfläche
- 102: Stützring
- 104: Ringstirnfläche
- 106: Bohrungsgrund
- 108: Hohlschraube
- 110: Ringstirnfläche
- 112: Stützfläche
- 114: Anschlagsfläche
- 116: Sacklochbohrung
- 118: Druckfeder
- 120: Bohrung
- 122: Druckmittelraum
- 124, 126: Kontaktstift
- 128, 130: Bohrung
- 132: Steckeraufnahme
- 134: O-Ring
- 136: O-Ring
- 138: innere Ringfläche
- 140: äußere Ringfläche
- 142: Spannungskurve
- 144: Hubkurve
- 146: Stromkurve
- 148: Boostspannung
- 150: Pick-Up-Spannung
- 152: Löschspannung
- 154: Kammerfläche
- 156, 158: Steuerkante
- 159: Radialbund
- 160: Haltezapfen
- 162: Aufnahmebohrung
- 164: Längsbohrung
- 166: Stufe
- 166: Bördelung

## Patentansprüche

1. Magnetventil mit einem Ventilgehäuse (4) in dem ein Ventilkörper (6), insbesondere ein Ventilschieber (6) oder ein Ventilstößel, zum Steuern zumindest einer Druckmittelverbindung verschiebbar geführt ist, wobei der Ventilkörper (6) mit einem Anker (66), insbesondere einem Flachanker (66), verbunden ist wobei gegenüberliegend von einer von dem Ventilkörper (6) abweisenden Stirnseite (72) des Ankers (66) ein Hubmagnet (2) zum Beaufschlagen des Ankers (66) mit einer Magnetkraft angeordnet ist, wobei der Hubmagnet (2) eine Spule mit einem Spulenkörper (84) und einer Spulenwicklung (82) hat, der in eine etwa in Axialrichtung eingebrachte im Wesentlichen hohlzylindrische Spulenaufnahme (80) eines Magnettopfs (76) eingesetzt ist, **dadurch gekennzeichnet, dass** etwa in Axialrichtung des Magnettopfs (76) ein Anschlagstift (88) in diesen eingesetzt ist, der aus dem Magnettopf (76) zum Anker (66) hin etwas auskragt.

2. Magnetventil nach Anspruch 1, wobei der Anker (66) über den Ventilkörper (6) in dem Ventilgehäuse (4) geführt ist.

3. Magnetventil nach Anspruch 1 oder 2, wobei der Magnettopf (76) an einer zum Anker (66) weisenden Topfseite (78) einen Topfvorsprung (98) oder eine entsprechenden Außenpolstufe (96) zum Eintauchen des Ankers (66) aufweist.

4. Magnetventil nach Anspruch 3, wobei in dem Anschlagstift (88) eine Aussparung (116) zur Aufnahme einer Druckfeder (118) ausgebildet ist, die sich am Anschlagstift (88) abstützt und den Anker (66) und/oder den damit verbundenen Ventilschieber mit einer Federkraft beaufschlagt.

5. Magnetventil nach Anspruch 3 oder 4, wobei sich der Anschlagstift (88) und der Magnettopf (76) jeweils an seiner vom Anker (66) abweisenden Stirnseite (90, 94) an einer gemeinsamen Stützfläche (91) abstützen.

6. Magnetventil nach einem der vorhergehenden Ansprüche, wobei der Magnettopf (76) in dem Ventilgehäuse (4) mit einer vergleichsweise geringen Toleranz eingepasst ist.

7. Magnetventil nach einem der vorhergehenden Ansprüche, wobei der Magnettopf (76) aus einem vergleichsweise hochohmigen weichmagnetischen Material, insbesondere aus einem Press- oder Sintermaterial, insbesondere aus einem Soft Magnetic Composite (SMC), besteht.

8. Magnetventil nach einem der vorhergehenden Ansprüche, wobei der Anker (66) aus einem hochohmigen weichmagnetischen Massivmaterial, insbesondere Chromstahl, insbesondere mit einem Chromanteil zwischen 10 bis 15 %, besteht.

9. Magnetventil nach einem der vorhergehenden Ansprüche, wobei das Ventilgehäuse (4) aus einem hochohmigen Material, insbesondere aus einem austenitischen Stahl, besteht.

10. Magnetventil nach einem der vorhergehenden Ansprüche, wobei der Anschlagstift (88) aus einem nicht ferromagnetischen, insbesondere aus einem austenitischen Stahl, insbesondere aus einem Edelstahl, besteht.

11. Verfahren zum Steuern eines Magnetventils (1) mit einem Ventilgehäuse (4) in dem ein Ventilkörper (6), insbesondere ein Ventilschieber (6) oder ein Ventilstößel, zum Steuern zumindest einer Druckmittelverbindung verschiebbar geführt ist, wobei der Ventilkörper (6) mit einem Anker (66), insbesondere einem Flachanker (66), verbunden ist, wobei gegenüberliegend von einer von dem Ventilkörper (6) abweisenden Stirnseite (72) des Ankers (66) ein Hubmagnet (2) zum Beaufschlagen des Ankers (66) mit einer Magnetkraft angeordnet ist, mit den Schritten:
- Anlegen einer Boostspannung an den Hubmagneten (2), die höher als eine Nennspannung ist, zum Einleiten einer Hubbewegung in Richtung einer Schaltstellung des Ankers (66),
- Anschließend Anlegen einer gegenüber der Boostspannung verringerten Spannung, und/oder
- Anlegen einer negativen Löschspannung an der Hubmagneten (2) bevor eine Spannungsversorgung unterbrochen wird zum schnellen Zurückbewegen des Ventilkörpers (6) in Richtung einer Grundstellung.

12. Verfahren nach Anspruch 11, wobei die verringerte Spannung eine zwischen der Boost- und der Nennspannung liegende Pick-Up-Spannung zur weiteren Beschleunigung des Ankers (66) ist.

13. Verfahren nach Anspruch 11 oder 12, wobei zum Abbremsen des Ankers (66) bei der Hubbewegung in Richtung der Schaltstellung eine negative Löschspannung und danach zum Halten des Ankers (66) eine positive unterhalb der Pick-Up-Spannung liegende Haltespannung an den Hubmagneten (2) angelegt wird.

## Claims

1. Solenoid valve having a valve housing (4) in which a valve body (6), in particular a valve slide (6) or a valve tappet, for controlling at least one pressure medium connection is guided in a displaceable manner, wherein the valve body (6) is connected to an armature (66), in particular a flat armature (66), wherein a lifting magnet (2) for exerting a magnetic force on the armature (66) is arranged opposite a face side (72), which is averted from the valve body (6), of the armature (66), wherein the lifting magnet (2) has a coil with a coil body (84) and with a coil winding (82), said coil body being inserted into a substantially hollow cylindrical coil receptacle (80) which is formed, approximately in an axial direction, in a magnet pot (76), **characterized in that** a stop pin (88) is inserted into the magnet pot (76) approximately in the axial direction of the latter, which stop pin projects slightly out of the magnet pot (76) in the direction of the armature (66).

2. Solenoid valve according to Claim 1, wherein the armature (66) is guided in the valve housing (4) by way of the valve body (6).

3. Solenoid valve according to Claim 1 or 2, wherein the magnet pot (76) has, on a pot side (78) pointing towards the armature (66), a pot projection (98) or a corresponding outer pole step (96) for the armature (66) to protrude into.

4. Solenoid valve according to Claim 3, wherein, in the stop pin (88), there is formed a cutout (116) for receiving a pressure spring (118) which is supported on the stop pin (88) and which exerts a spring force on the armature (66) and/or on the valve slide connected to said armature.

5. Solenoid valve according to Claim 3 or 4, wherein the stop pin (88) and the magnet pot (76) are supported, in each case at that end side (90, 94) thereof which is averted from the armature (66), on a common support surface (91).

6. Solenoid valve according to one of the preceding claims, wherein the magnet pot (76) fits in the valve housing (4) with a relatively small tolerance.

7. Solenoid valve according to one of the preceding claims, wherein the magnet pot (76) is composed of a relatively high-impedance soft magnetic material, in particular of a pressed or sintered material, in particular of a soft magnetic composite (SMC).

8. Solenoid valve according to one of the preceding claims, wherein the armature (66) is composed of a high-impedance soft magnetic solid material, in particular chromium steel, in particular with a chromium fraction of between 10 and 15%.

9. Solenoid valve according to one of the preceding claims, wherein the valve housing (4) is composed of a high-impedance material, in particular of an austenitic steel.

10. Solenoid valve according to one of the preceding claims, wherein the stop pin (88) is composed of a non-ferromagnetic, in particular austenitic, steel, in particular of a high-grade steel.

11. Method for controlling a solenoid valve (1) having a valve housing (4) in which a valve body (6), in particular a valve slide (6) or a valve tappet, for controlling at least one pressure medium connection is guided in a displaceable manner, wherein the valve body (6) is connected to an armature (66), in particular a flat armature (66), wherein a lifting magnet (2) for exerting a magnetic force on the armature (66) is arranged opposite a face side (72), which is averted from the valve body (6), of the armature (66), having the steps:
- applying to the lifting magnet (2) a boost voltage, which is higher than a nominal voltage, in order to initiate a lifting movement in the direction of a switched position of the armature (66),
- subsequently applying a voltage which is reduced in relation to the boost voltage, and/or
- applying a negative extinction voltage to the lifting magnet (2), in order to quickly move the valve body (6) back in the direction of a basic position, before a voltage supply is interrupted.

12. Method according to Claim 11, wherein the reduced voltage is a pick-up voltage, which lies between the boost voltage and the nominal voltage, for further accelerating the armature (66).

13. Method according to Claim 11 or 12, wherein, in order to brake the armature (66) during the lifting movement in the direction of the switched position, a negative extinction voltage is applied to the lifting magnet (2), and thereafter, in order to hold the armature (66), a positive holding voltage that lies below the pick-up voltage is applied to the lifting magnet (2).

## Revendications

1. Soupape magnétique comprenant un boîtier de soupape (4) dans lequel est guidé de manière déplaçable un corps de soupape (6), en particulier un tiroir de soupape (6) ou une tige de soupape, pour commander au moins une connexion par fluide sous pression, le corps de soupape (6) étant connecté à un induit (66), en particulier un induit plat (66), un électroaimant de levage (2) pour solliciter l'induit (66) avec une force magnétique étant disposé en regard d'un côté frontal (72) de l'induit (66) opposé au corps de soupape (6), l'électroaimant de levage (2) présentant une bobine avec un corps de bobine (84) et un enroulement de bobine (82), qui est inséré dans un logement de bobine (80) essentiellement cylindrique creux d'un pot magnétique (76), réalisé approximativement dans la direction axiale, **caractérisée en ce qu'**une goupille de butée (88) est insérée approximativement dans la direction axiale du pot magnétique (76) dans ce dernier, et fait quelque peu saillie vers l'induit (66) depuis le pot magnétique (76).

2. Soupape magnétique selon la revendication 1, dans laquelle l'induit (66) est guidé dans le boîtier de soupape (4) par le biais du corps de soupape (6).

3. Soupape magnétique selon la revendication 1 ou 2, dans laquelle le pot magnétique (76) présente, au niveau d'un côté du pot (78) tourné vers l'induit (66), une saillie de pot (98) ou un étage de pôle extérieur correspondant (96) pour l'introduction de l'induit (66).

4. Soupape magnétique selon la revendication 3, dans laquelle, dans la goupille de butée (88), est réalisé un évidement (116) pour recevoir un ressort de compression (118) qui s'appuie contre la goupille de butée (88) et qui sollicite l'induit (66) et/ou le tiroir de soupape connecté à celui-ci avec une force de ressort.

5. Soupape magnétique selon la revendication 3 ou 4, dans laquelle la goupille de butée (88) et le pot magnétique (76) s'appuient à chaque fois au niveau de son côté frontal (90, 94) opposé à l'induit (66) contre une surface de support commune (91).

6. Soupape magnétique selon l'une quelconque des revendications précédentes, dans laquelle le pot magnétique (76) est ajusté dans le boîtier de soupape (4) avec une tolérance relativement faible.

7. Soupape magnétique selon l'une quelconque des revendications précédentes, dans laquelle le pot magnétique (76) se compose d'un matériau à relativement haute impédance et faible aimantation, en particulier d'un matériau pressé ou fritté, en particulier d'un matériau magnétique doux (Soft Magnetic Composite, SMC).

8. Soupape magnétique selon l'une quelconque des revendications précédentes, dans laquelle l'induit (66) se compose d'un matériau massif à haute impédance et faible aimantation, en particulier d'acier chromé, en particulier ayant une proportion de chrome comprise entre 10 et 15 %.

9. Soupape magnétique selon l'une quelconque des revendications précédentes, dans laquelle le boîtier de soupape (4) se compose d'un matériau de forte impédance, en particulier d'un acier austénitique.

10. Soupape magnétique selon l'une quelconque des revendications précédentes, dans laquelle la goupille de butée (88) se compose d'un acier non ferromagnétique, en particulier d'un acier austénitique, en particulier d'un acier noble.

11. Procédé de commande d'une soupape magnétique (1) comprenant un boîtier de soupape (4) dans lequel est guidé de manière déplaçable un corps de soupape (6), en particulier un tiroir de soupape (6) ou une tige de soupape, pour commander au moins une connexion par fluide sous pression, le corps de soupape (6) étant connecté à un induit (66), en particulier un induit plat (66), un électroaimant de levage (2) pour solliciter l'induit (66) avec une force magnétique étant disposé en regard d'un côté frontal (72) de l'induit (66) opposé au corps de soupape (6), comprenant les étapes suivantes :
- application d'une tension d'amplification à l'électroaimant de levage (2), laquelle est supérieure à une tension nominale, pour introduire un mouvement de levage dans la direction d'une position de commutation de l'induit (66),
- puis application d'une tension réduite par rapport à la tension d'amplification, et/ou
- application d'une tension d'extinction négative à l'électroaimant de levage (2) avant l'interruption de l'alimentation en tension, en vue du déplacement de retour rapide du corps de soupape (6) dans la direction d'une position de base.

12. Procédé selon la revendication 11, dans lequel la tension réduite est une tension d'excitation située entre la tension d'amplification et la tension nominale, destinée à l'accélération supplémentaire de l'induit (66).

13. Procédé selon la revendication 11 ou 12, dans lequel pour le freinage de l'induit (66) lors du mouvement de levage dans la direction de la position de commutation, une tension d'extinction négative est appliquée, et ensuite, pour retenir l'induit (66), une tension de retenue positive située en dessous de la tension d'excitation est appliquée à l'électroaimant de levage (2).
